# EUROPÄISCHE PATENTSCHRIFT

(11) **EP 2 366 914 B1**
(45) Veröffentlichungstag und Bekanntmachung des Hinweises auf die Patenterteilung: **28.11.2012**
(21) Anmeldenummer: 11002151.6
(22) Anmeldetag: 15.03.2011
(51) Int. Cl.: F16D 65/12

(54) **Bremsrotor**
Brake rotor
Rotor de freinage

(30) Priorität: 19.03.2010 DE 202010003882 U
(43) Veröffentlichungstag der Anmeldung: 21.09.2011
(73) Patentinhaber: Rex Industrie-Produkte Graf von Rex GmbH, 74541 Vellberg (DE)
(72) Erfinder: Ludwig, Fritz, 74545 Michelfeld (DE)
(74) Vertreter: TER MEER - STEINMEISTER & PARTNER GbR

(56) Entgegenhaltungen:
- WO-A1-2008/033137
- DE-A1-102007 013 401
- DE-C2- 3 046 696
- DE-C2- 3 050 284
- US-A1- 2007 029 157

## Beschreibung

Die Erfindung betrifft einen Bremsrotor.

Bremsrotoren werden üblicherweise drehfest, axial verschiebbar, mit einer zu bremsenden Welle verbunden, wobei zum Bremsen der Bremsrotor zwischen zwei Reibbelege je nach der gewünschten Bremswirkung mehr oder weniger stark eingeklemmt wird, um die Drehgeschwindigkeit der zu bremsenden Welle zu verzögern. Derartige Bremsrotoren können beispielsweise als Spindelbremsen in Textilmaschinen, als Stoppbremsen in Elektrostellmotoren oder als Kupplunassysteme im Maschinenbau eingesetzt werden.

Aus der DE 60 2005 000 056 T2 ist eine Bremsscheibe für Schienenfahrzeuge bekannt, die eine mit einer Tragplatte versehene Nabe aufweist. Auf der Tragplatte sind zwei Bremsreibungsplatten kranzförmig angeordnet die die eigentlichen Kontaktreibungsflächen bilden. Die Bremsreibungsplatten sind mit geeigneten Verbindungselementen, wie zum Beispiel Schraubbolzen, Nieten, Klebern, formschlüssig oder klemmbar mit der Tragplatte verbunden.

Aus der DE 103 58 320 A1 sind bereits Reibkörper bekannt, die im Allgemeinen einen Träger oder eine Trägerplatte und mindestens einen darauf angeordneten Reibbelag aufweisen. Dabei bestehen sowohl der Träger als auch der mindestens einen darauf angeordnete Reibbelag aus ausgehärteten Reibmaterialien auf der Grundlage von Verstärkungsfasern, hitzehärtbaren Bindemitteln und herkömmlichen Füllstoffen, so dass der Reibkörper einstückig ausgebildet ist. Derartige Reibkörper lassen sich als Brems-, Kupplungs- oder andere Reibbeläge einsetzten.

Die WO 2008/033137 A1 beschreibt eine Fahrstuhlbremse mit einer Verbundstoff-Bremsnabe. Die hierfür verwendete Bremsscheibe weist einen zentralen Innenbereich aus einer ersten Materialzusammensetzung eines verstärkten Plastikmaterials, welcher einen Nabenabschnitt mit einer konzentrischen Durchgangsöffnung zur Aufnahme einer zu bremsenden Welle aufweist, und einen konzentrisch an den zentralen Innenbereich angeordneten ringförmigen Außenbereich aus einer zweiten Materialzusammensetzung auf, welcher einen Bremsabschnitt mit einer Reibfläche aufweist. Der zentrale Innenbereich und der ringförmige Außenbereich sind dabei stoffschlüssig miteinander verbunden, wobei die Trennfläche zwischen dem Innenbereich und dem Außenbereich eine radiale Seitenfläche zwischen der den zentralen Innenbereich bildenden Scheibe und der den ringförmigen Außenbereich bildenden ringförmigen Bremsscheibe bildet. Die ringförmige Bremsscheibe, welche auf der inneren Trägerscheibe sitzt, ist dabei hinsichtlich ihrer tribologischen Eigenschaften optimiert.

DE 3050284 C2 zeigt eine weitere Bremsscheibe, die einem scheibenförmigen Belagträgen alus Kunststoff mit aufgeklebten Reibelementen aufweist.

Bei einem Bremsrotor, welcher einstückig aus einem faserverstärkten Duroplasten hergestellt ist und dessen Materialzusammensetzung auf einen hohen und je nach Anwendungsfall auch mittleren µ-Wert optimiert ist, kann es bei sehr hoher mechanischer Beanspruchung zum Bruch des Rotors kommen, da der Nabenbereich des Bremsrotors eine entsprechend geringe Festigkeit besitzt. Dies ist darin begründet, dass ein Reibmaterial, das eine hohe Kompressibilität, hohe Dehnung bei den Festigkeitsprüfungen mit hohen Reibewerten und dadurch eine geringe Neigung zur Schwingumgserregung besitzt, keine hohen Festigkeiten erreichen kann.

Der Erfindung liegt daher die Aufgabe zugrunde, einen Bremsrotor zu schaffen, welcher in seinen Kopplungsbereich mit einer Welle eine hohe Festigkeit und in einem Kontaktbereich mit einem Bremskörper einen hohen Reibwert aufweist.

Diese Aufgabe ist durch den Bremsrotor nach Anspruch 1 gelöst. Vorteilhafte Ausgestaltungen und Weiterbildungen der Erfindung sind in den Unteransprüchen angegeben.

Insbesondere wird ein Bremsrotor bereitgestellt, mit einem zentralen Innenbereich aus einer ersten Materialzusammensetzung eines faserverstärkten Duroplasten, welcher einen Nabenabschnitt mit einer konzentrischen Durchgangsöffnung zur Aufnahme einer zu bremsenden Welle aufweist, und einem konzentrisch an dem zentralen Innenbereich angeordneten ringförmigen Außenbereich aus einer zweiten Materialzusammensetzung eines faserverstärkten Duroplasten, welcher einen Bremsabschnitt mit einer Reibfläche aufweist, wobei der zentrale Innenbereich und der ringförmige Außenbereich stoffschlüssig miteinander verbunden sind, und wobei der zentrale Innenbereich eine hohe innere Festigkeit und der ringförmige Außenbereich einen hohen und von der späteren Anwendung abhängigen auch mittleren µ-Wert aufweisen kann.

Es wird also erfingdungsgemäß ein Bremsrotor geschaffen, bei welchem ein radialer Innenabschnitt und ein radialer ringförmiger Außenabschnitt des Bremsrotors aus einem πähnlichen Trägermaterial, nämlich einem faserverstärkten Duroplasten hergestellt sind, wobei jedoch die Materialzusammensetzung des radialen Außenabschnitts zusätzlich Reibmaterialien enthält, welche dafür sorgen, dass die Oberfläche des Außenabschnitts einen mittleren bzw. hohen µ-Wert aufweist. Die beiden Abschnitte sind stoffschlüssig miteinander verbunden, wodurch der Innenabschnitt auf hohe innere Festigkeit und der Außenabschnitt auf einen mittleren, oder nach Anwendungsfall hohen µ-Wert optimiert sind. Trotz der unterschiedlichen Eigenschaften des Innenbereichs und des Außenbereichs des Bremsrokann jedoch trotzdem ein integraler Rotor aus einem gemeinsamen Trägermaterial bereitgestellt werden.

Für die Umsetzung eines zentralen Innenbereichs mit optimierter Festigkeit ist es bevorzugt, wenn die erste Materialzusammensetzung des faserverstärkten Duroplasten eine Dichte von 1,0 bis 2,6 g/cm³, vorzugsweise 1,6 bis 2,3 g/cm³ und insbesondere 2,1 g/cm³, eine Zugfestigkeit von 50 bis 200 N/mm², vorzugsweise 80 bis 160 N/mm², und insbesondere 140 N/mm², eine Biegefestigkeit von 70 bis 300 N/mm², vorzugsweise 220 bis 260 N/mm² und insbesondere 240 N/mm², und eine Druckfestigkeit von 120 bis 375 N/mm², vorzugsweise 300 bis 350 N/mm², und insbesondere 325 N/mm² aufweist.

Bei einer Optimierung der Materialzusammensetzung des an den zentralen Innenbereich angeordneten ringförmigen Außenbereichs ist es von Vorteil, wenn die zweite Materialzusammensetzung des faserverstärkten Duroplasten eine Dichte von 1 bis 2 g/cm³, vorzugsweise 1,4 bis 1,8 g/cm³ und insbesondere 1,6 g/cm³, eine Zugfestigkeit von 10 bis 100 N/mm², vorzugsweise 10 bis 50 N/mm², und insbesondere 29 N/mm², eine Biegefestigkeit von 10 bis 100 N/mm², vorzugsweise 50 bis 90 N/mm² und insbesondere 68 N/mm², und eine Druckfestigkeit von 50 bis 150 N/mm², vorzugsweise 70 bis 110 N/mm², und insbesondere 86 N/mm² aufweist.

In einer einfachen und bevorzugten Ausgestaltung der Erfindung enthält die erste und zweite Materialzusammensetzung des faserverstärkten Duroplasten phenoplastische Kunststoffe, wie beispielsweise Phenolharz, Phenol/Melaminharz oder Epoxydharz auf Phenolharz-Basis, bzw. Aminoplaste, Epoxydharz und/oder vernetzte Polyacrylate. Weiter kann die Zusammensetzung des faserverstärkten Duroplasten Aminoplastische/Phenolharz modifizierte Verbindungen, die beide über Methylenbrücken (-CH 2-), oder Methylenetherbrücken miteinander verbunden sind, aber auch Epoxydharze, vernetzte Polyacrylate und weitere vernetzte Polymere beinhalten.

Um den Bremsrotor auch hinsichtlich seiner Zug- und Biegefestigkeit zu optimieren, enthält die erste und zweite Materialzusammensetzung des faserverstärkten Duroplasten 10 bis 60 Gew.-%, vorzugsweise 20 bis 50 Gew.-% Verstärkungsfasern, bezogen auf das Gesamtgewicht des Bremsrotors.

Hierbei ist es zweckmäßig, wenn die erste und zweite Materialzusammensetzung des faserverstärkten Duroplasten organische und/oder anorganische Verstärkungsfasern enthalten, wobei die erste und zweite Materialzusammensetzung des faserverstärkten Duroplasten als Verstärkungsfasern Glasfasern, Keramikfasern, Aluminiumoxidfasern, Kohlenstofffasern, Aramidfasern und/oder metallische Fasern, plus Cellulosefasern und Mineralfasern enthalten.

Hierbei ist es von Vorteil, wenn die Verstärkungsfasern eine mittlere Faserlänge von 3 bis 15 mm, vorzugsweise von 5 bis 10 mm aufweisen.

Zur Erreichung eines je nach Anwendungsfall geforderten mittleren bzw. hohen µ-Werts der Oberfläche des ringförmigen Außenbereichs des Bremsrotors ist es vorteilhaft, wenn die zweite Materialzusammensetzung des faserverstärkten Duroplasten neben den Verstärkungsfasern und einem Duroplast als Zusatzstoffe Gleitmittel wie Grafit, spezielle Schwefelverbindungen (Sulfide), inaktive Füllstoffe z.B. Bariumsulfit, Calciumcarbonat, oder Mischungen davon, weiterhin aktive Füllstoffe auf organischer Basis wie Resite und anorganische aktive Füllstoffe wie Nitride, Carbide, Oxide, spezielle Schwefelverbindungen und vernetzte bzw. unvernetzte Elastomere enthält.

Um eine optimale Drehfestigkeit zwischen Bremsrotor und bremsender Welle zu erzielen, ohne eine leicht gängige Axialverschiebbarkeit des Bremsrotors zum schnellen Aktivieren der Bremse zu beeinträchtigen, ist es zweckmäßig, wenn die Innenumfangsfläche der Durchgangsöffnung im Nabenabschnitt mit Mitnahmemitteln zur drehfesten Lagerung auf einer zu bremsenden Welle versehen ist.

Grundsätzlich ist es denkbar, dass die Durchgangsöffnung des Nabenabschnitts jede beliebige unrunde Form -Dreikant, Vierkant, Abplattung mit axialer Nut oder dergleichen- aufweist, die mit dem Außenumfang der zu bremsenden Welle korrespondiert und für eine drehfeste Lagerung geeignet ist. Vorteilhafter Weise ist jedoch vorgesehen, dass die Mitnahmemittel von einer Verzahnung zur Aufnahme einer Wellenverzahnung auf der zu bremsenden Welle gebildet sind. Bevorzugt weist also die Innenumfangsfläche der Durchgangsöffnung im Nabenabschnitt eine Verzahnung zur Aufnahme einer Wellenverzahnung der zu bremsenden Welle auf.

Um eine Optimierung des Gewichts und des Massenträgheitsmomentes des Bremsrotors gemäß der Erfindung zu erreichen, ist es von Vorteil, wenn sowohl der zentrale Innenbereich als auch der ringförmige Außenbereich im Grenzbereich des stoffschlüssigen Übergangs zwischen der ersten und der zweiten Materialzusammensetzung eine geringere Dicke aufweisen als die des Nabenabschnitts des zentralen Innenbereichs und die des Bremsabschnitts des ringförmigen Außenbereichs.

Um zusätzlich zu einem Stoffschluss einen Formschluss zwischen zentralem Innenbereich und ringförmigem Außenbereich zu erreichen, wodurch in der Scheibenebene des Bremsrotors auftretende Scherkräfte beim Bremsen in verbesserter Weise aufgenommen werden können, ist es erfindungsgemäß vorgesehen, dass der zentrale Innenbereich an seiner Umfangsseite einen oder mehrere radial nach außen gerichtete Mitnehmerfortsätze aufweist, welche mit einem oder mehreren radial nach Innen gerichteten Mitnehmerfortsätzen des ringförmigen Außenbereichs formschlüssig in Eingriff stehen.

Bei laufenden Versuchen mit einem kreisförmigen Formschluss wurden noch keine Beschädigungen an den Übergängen festgestellt. Einen wesentlichen Vorteil zeigte der Einsatz von zwei Materialien. Hierbei wurden Vibrationen vermindert. Darüber hinaus ist ein Einsatz von mehreren halbkreisförmigen Übergängen in Polygon-Form vorstellbar.

Es ist jedoch auch möglich, statt der Mitnehmerfortsätze unregelmäßige Strukturen im Übergangsbereich von der ersten zu der zweiten Materialzusammensetzung des faserverstärkten Duroplasten im Grenzbereich zwischen zentralem Innenbereich und ringförmigem Außenbereich vorzusehen, wodurch ebenfalls ein Formschluss zwischen den beiden Bereichen vorteilhafterweise erreicht werden kann.

Die Erfindung wird im Folgenden beispielsweise anhand von in der Zeichnung dargestellten Ausführungsbeispielen beschrieben. Es zeigen:
Figur 1A eine Draufsicht auf einen erfindungsgemäßen Bremsrotor gemäß einem ersten Ausführungsbeispiel der Erfindung;
Figur 1B einen Schnitt durch den erfindungsgemäßen Bremsrotor nach Linie I - I in Figur 1A;
Figur 2A eine Draufsicht auf einen erfindungsgemäßen Bremsrotor gemäß einem zweiten Ausführungsbeispiel der Erfindung;
Figur 2B einen Schnitt durch den erfindungsgemäßen Bremsrotor nach Linie I - I in Figur 2A;
Figur 3A eine Draufsicht auf einen erfindungsgemäßen Bremsrotor gemäß einem dritten Ausführungsbeispiel der Erfindung;
Figur 3B einen Schnitt durch den erfindungsgemäßen Bremsrotor nach Linie I - I in Figur 3A;

In den verschiedenen Figuren der Zeichnung sind einander entsprechende Bauelemente mit gleichen Bezugszeichen versehen.

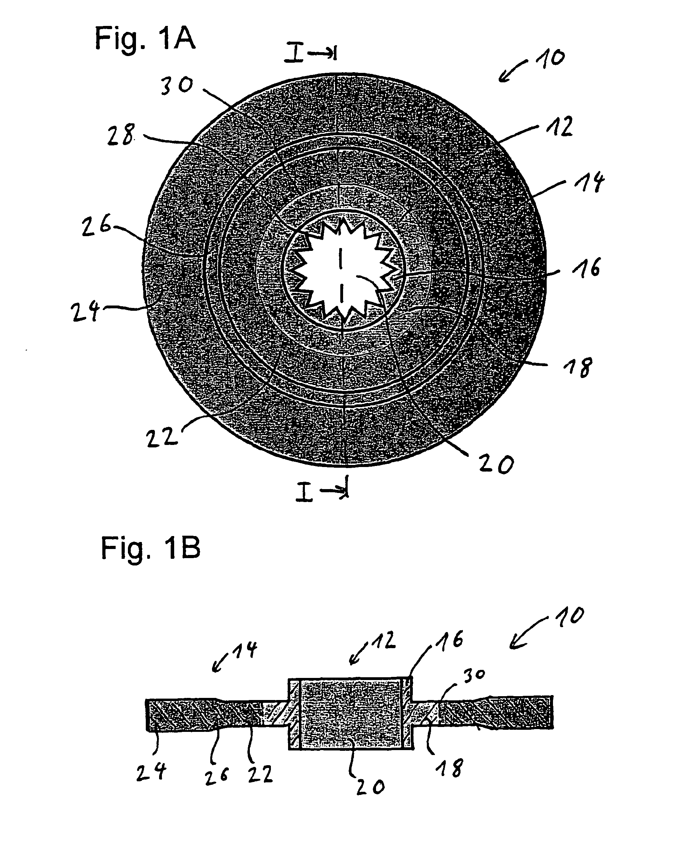

In Figur 1A ist eine Draufsicht auf einen erfindungsgemäßen Bremsrotor 10 gemäß einer ersten Ausführungsform der Erfindung gezeigt. Der erfindungsgemäße Bremsrotor 10 ist in Form einer Kreisscheibe ausgebildet und umfasst einen zentralen Innenbereich 12 und einen konzentrisch an den zentralen Innenbereich angeordneten ringförmigen Außenbereich 14. Der Innenbereich 12 weist einen zentralen Nabenabschnitt 16 und einen sich an den Nabenabschnitt 16 anschließenden ersten Flanschabschnitt 18 auf. Der Nabenabschnitt 12 umfasst eine zum Außenumfang des Bremsrotors 10 konzentrisch angeordnete Durchgangsöffnung 20 zur Aufnahme einer zu bremsenden Welle (nicht gezeigt). Der ringförmige Außenbereich 14 umfasst einen zweiten Flanschabschnitt 22, einen Bremsabschnitt 24 sowie einen zwischen zweitem Flanschabschnitt 22 und Bremsabschnitt 24 befindlichen Übergangsabschnitt 26.

Wie in Figur 1B gezeigt, weist der Nabenabschnitt 16 beim dargestellten Ausführungsbeispiel in Axialrichtung der Durchgangsöffnung 20 eine Dicke auf, die etwa zwei bis dreimal so groß ist wie die Dicke des Bremsrotors 10 im Bereich des Bremsabschnitts 24. Bei einer dargestellten Ausführungsform liegt die Dicke des Nabenabschnitts im Bereich von etwa 5 bis 15 mm, insbesondere von etwa 10 bis 15 mm. Der sich an den Nabenabschnitt 16 anschließende erste Flanschabschnitt 18 des Innenbereichs 12 weist eine Dicke auf, die im Bereich von etwa 2 bis 10 mm und insbesondere bei 5 mm liegt. Der zweite Flanschabschnitt 22 des Außenbereichs 14 weist die gleiche Dicke auf wie der erste Flanschabschnitt 18 des Innenbereichs 12. Es ist jedoch auch möglich, dass der zweite Flanschabschnitt 22 auf einer Seite des Bremsrotors 10 graduell in den Bremsabschnitt 24 hinsichtlich seiner Dicke übergeht. Der Bremsabschnitt 24 weist eine Dicke auf, welche im Bereich zwischen 5 und 15 mm und insbesondere bei 10 mm liegt.

Zwischen dem zweiten Flanschabschnitt 22 und dem Bremsabschnitt 24 des Außenbereichs 14 ist der Übergangsbereich 26 vorgesehen, welcher einen graduellen Übergang zwischen den Dicken des zweiten Flanschabschnitts 22 und des Bremsabschnitts 24 schafft. Es ist aber auch möglich, die Dicke des Nabenabschnitts 16 und des Bremsabschnitts 14 gleich zu wählen, ohne dadurch die Funktionsfähigkeit des Bremsrotors 10 zu beeinträchtigen. Der verjüngte Zwischenbereich aus ersten und zweiten Flanschabschnitte 18 und 22 sorgt lediglich für ein verringertes Gewicht sowie ein reduziertes Massenträgheitsmoment des Bremsrotors 10. Insbesondere ist zu berücksichtigen, dass die in dem Ausführungsbeispiel angegebenen Dickenabmessungen sehr stark vom Einsatzgebiet und von der Größe, also insbesondere vom erforderlichen Durchmesser des Bremsrotors 10 abhängen. Der Durchmesser des gezeigten Ausführungsbeispiels des Bremsrotors 10 liegt bei etwa 100 mm. Bei Bremsrotoren mit größerem Durchmesser sind auch entsprechende größere Dicken des Bremsrotors 10 erforderlich.

Um den Bremsrotor 10 drehfest, aber axial verschiebbar, auf einer zu bremsenden Welle, beispielsweise auf einer zu bremsenden Welle eines Antriebs anzuordnen, ist die Innenumfangsfläche der Durchgangsöffnung 20 mit einer Verzahnung 28 versehen, die in eine entsprechende Verzahnung auf einer zu bremsenden Welle eingreift.

Anstelle der dargestellten Verzahnung 28 zur drehfesten Lagerung des Bremsrotors 10 auf einer Welle kann auch jede andere bekannte unrunde Form gewählt werden. Zum Beispiel kann die Welle einen als Vierkant oder abgeplattet und mit Axialfeder ausgebildeten Wellenstummel aufweisen, auf den die Bremsscheibe dann mit einer entsprechenden quadratischen Öffnung oder einer abgeplatteten Öffnung mit Gegennut aufgesetzt wird.

Wie in Figur 1B gezeigt, ist der zentrale Innenbereich 12 aus einer ersten Materialzusammensetzung eines faserverstärkten Duroplasten und der ringförmige Außenbereich 14 aus einer zweiten Materialzusammensetzung eines faserverstärkten Duroplasten hergestellt. Als Duroplast kann hierfür beispielsweise ein phenoplastischer Kunststoff wie Phenolharz, Phenol/Melaminharz oder Epoxydharz auf Phenolharz-Basis verwendet werden.

Die erste und zweite Materialzusammensetzung enthalten vorzugsweise 10 bis 60 Gew.-%, vorzugsweise 20 bis 50 Gew.-% Verstärkungsfasern, bezogen auf das Gewicht des Bremsrotors. Als Verstärkungsfasern können organische und/oder anorganische Fasern vorliegen, beispielsweise Glasfasern, Keramikfasern, Aluminiumoxidfasern, Kohlenstofffasern, Aramidfasern, metallische Fasern, plus Cellulosefasern und Mineralfasern oder Gemische aus diesen Fasern. Vorzugsweise besitzen die Verstärkungsfasern eine mittlere Faserlänge von 3 bis 15 mm, vorzugsweise 5 bis 10 mm.

Die beim erfindungsgemäßen Bremsrotor für den ringförmigen Außenbereich 14 verwendete zweite Materialzusammensetzung enthält neben den Verstärkungsfasern, die auf metallischen, anorganischen oder organischen Komponenten aufgebaut sein können, ein hitzehärtbares Bindemittel, vorzugsweise auf Basis eines modifizierten Phenolharzes, das gegebenenfalls mit Melaminharzen, Polyamid-Verbindungen, Epoxidharzen, Kresolharzen, Ölkomponenten, Polyimiden und vernetzbaren Polyacrylaten und dergleichen in Mengen von 1 bis 15 Gew.-% versetzt sein kann. Diese Reibmaterialien enthalten weiterhin als übliche Zusatzstoffe Gleitmittel, wie Graphit, Molybdendisulfid, Bariumsulfat, Calciumcarbonat oder Mischungen davon in Mengen von 10 bis 25, vorzugsweise 15 bis 20 Gew.-%, Schleifmittel auf der Grundlage von Oxiden, Nitriden oder Carbiden, wie beispielsweise Al₂O₃, SiO₃, Cr₂O₃, Fe₂O₃, Fe₃O₄, ZrO₂, MgO, CaO, SiC, PM, PC, Si₃N₄ und AlN und Gemische davon in Mengen von 0,5 bis 10 Gew.-%, vorzugsweise 1 bis 5 Gew.-%. Weiterhin kann die zweite Materialzusammensetzung Füllstoffe wie Bariumsulfat oder Calciumsulfat enthalten, vulkanisierten oder unvulkanisierten natürlichen Kautschuk oder synthetischen Kautschuk in Mengen von 1 bis 15 Gew.-%, vorzugsweise 5 bis 10 Gew.-%.

Somit ist also die erste Materialzusammensetzung des zentralen Innenbereichs 12 dahingehend optimiert, dass dieser Bereich eine hohe Festigkeit, insbesondere eine hohe Zugfestigkeit aufweist, um eine optimale Kraftübertragung von dem Nabenabschnitt 16 auf eine zu bremsende Welle zu gewährleisten, einen Bruch bei starker Belastung des Bremsrotors 10 zu vermeiden und Vibrationen zu mindern. Die zweite Materialzusammensetzung des Außenbereichs 14 ist dahingehend optimiert, einen möglichst weiten Reibwertbereich abzudecken, welcher im Bereich von 0,2 bis 0,6, vorzugsweise zwischen 0,3 und 0,5 liegt.

Eine optimierte erste Materialzusammensetzung des faserverstärkten Duroplasten hat eine Dichte im Bereich von 1,0 bis 2,6 g/cm³, vorzugsweise 1,6 bis 2,3 g/cm³ und insbesondere 2,1 g/cm³. Die Materialzusammensetzung des Innenbereichs 12 des Bremsrotors 10 besitzt eine Zugfestigkeit von 50 bis 200 N/mm², vorzugsweise 80 bis 160 N/mm² und insbesondere 140 N/mm². Die Biegefestigkeit liegt im Bereich von 70 bis 300 N/mm², vorzugsweise 220 bis 260 N/mm² und insbesondere 240 N/mm². Die erste Materialzusammensetzung des faserverstärkten Duroplasten weist ferner erfindungsgemäß eine Druckfestigkeit von 120 bis 375 N/mm², vorzugsweise 300 bis 350 N/mm² und insbesondere 325 N/mm² auf.

Die zweite Materialzusammensetzung des faserverstärkten Duroplasten fürden Außenbereich 14 des Bremsrotors 10 weist eine Dichte von 1 bis 2 g/cm³, vorzugsweise 1,4 bis 1,8g/cm³ und insbesondere 1,6 g/cm³ auf. Ferner beträgt die Zugfestigkeit der zweiten Materialzusammensetzung des faserverstärkten Duroplasten 10 bis 100 N/mm², vorzugsweise 10 bis 50 N/mm² und insbesondere 29 N/mm². Die Biegefestigkeit dieses Materials liegt bei 10 bis 100 N/mm², vorzugsweise 50 bis 90 N/mm² und insbesondere bei 68 N/mm². Die Druckfestigkeit der zweiten Materialzusammensetzung liegt bei 50 bis 150 N/mm², vorzugsweise 70 bis 110 N/mm² und insbesondere bei 86 N/mm².

Ein Bremsrotor 10 mit den oben beschriebenen Parametern, welcher auf der Basis eines faserverstärkten Duroplasten gebildet ist und in seinem Außenbereich 14 zusätzliche Reibmaterialien aufweist, zeigt bei hoher mechanischer und thermischer Beanspruchung einerseits eine optimale Festigkeit des Nabenbereichs 16 im Innenbereich 12 aufgrund fehlender Zusatzstoffe zur Erhöhung des Reibfaktors, als auch eine optimale Reibwirkung des Bremsabschnitts 24 des Außenbereichs 14, wobei zusätzlich ein guter Stoffschluss zwischen den beiden Bereichen, bedingt durch eine hohe Reaktionsaffinität aufgrund von kovalenten Bindungen, möglich ist.

Wie in Figur 1A und 1B gezeigt, liegt der Übergangsbereich 30 zwischen zentralem Innenbereich 12 mit der ersten Materialzusammensetzung und dem ringförmigen Außenbereich 14 mit der zweiten Materialzusammensetzung in dem verjüngten Bereich des Bremsrotors 10, wird also durch die Grenzfläche zwischen radialer Außenseite des ersten Flanschabschnitts 18 und radialer Innenseite des zweiten Flanschabschnitts 22 gebildet. Dieser Übergangsbereich 30 zwischen den beiden Materialzusammensetzungen kann, wie in Figur 1A gezeigt, entlang eines kreisförmigen Umfangsbereichs angeordnet sein, und sich gerade in axialer Richtung durch den Bremsrotor 10 hindurch erstrecken.

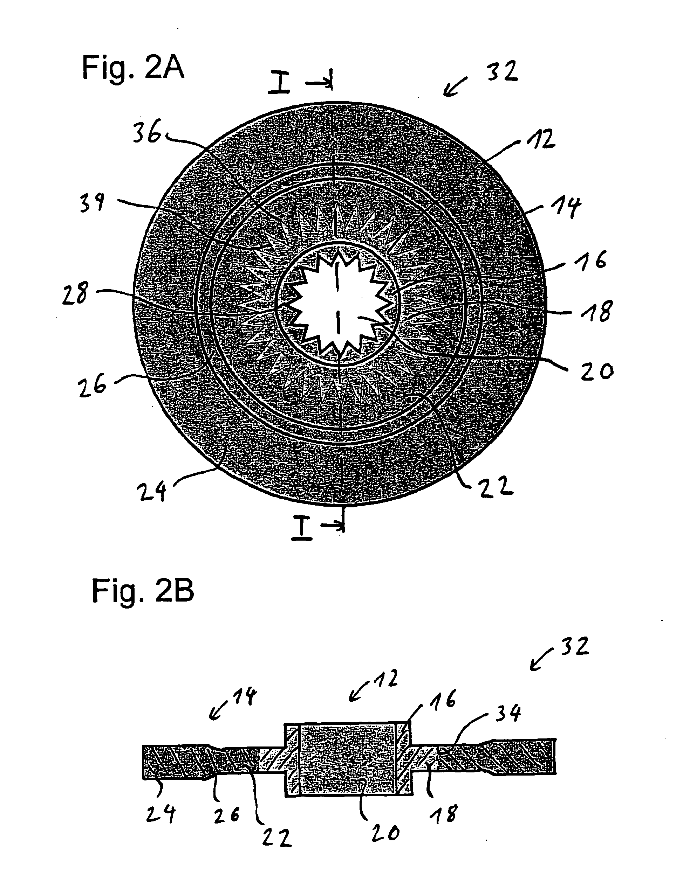

Wie in den Figuren 2A und 2B gezeigt, kann bei einem Bremsrotor 32 gemäß einem zweiten Ausführungsbeispiel der Erfindung ein Kraftschluss zwischen dem zentralen Innenbereich 12 und dem Außenbereich 14 noch weiter dadurch verbessert werden, dass neben einem Stoffschluss zwischen den beiden Bereichen 12, 14 zusätzlich ein Formschluss der beiden ineinander greifenden Bereiche vorgesehen ist. Durch diese Ausgestaltung werden darüber hinaus auftretende Vibrationen gemindert.

Der Bremsrotor 32 entspricht im Wesentlichen dem Bremsrotor 10 des ersten Ausführungsbeispiels der Erfindung, wobei lediglich ein Übergangsbereich 34 zwischen dem zentralen Innenbereich 12 mit der ersten Materialzusammensetzung und dem radialen Außenbereich 14 mit der zweiten Materialzusammensetzung modifiziert ist. Wie in Figur 2A gezeigt, weist der Innenbereich 12 eine Mehrzahl von radial nach außen gerichteten Mitnehmerfortsätzen 36 auf, welche sich sternförmig von einem kreisförmigen Innenabschnitt des Innenbereichs 12 wegerstrecken. Der ringförmige Außenbereich 14 weist radial nach innen gerichtete Mitnehmerfortsätze auf, welche in die Mitnehmerfortsätze 36 des Innenbereichs 12 formschlüssig eingreifen. Wie in Figur 2B gezeigt, erstreckt sich der Übergangsbereich 36 gerade in Axialrichtung durch den Bremsrotor 32 hindurch.

Der Bremsrotor 10 gemäß dem ersten Ausführungsbeispiel der Erfindung und der Bremsrotor 32 gemäß dem zweiten Ausführungsbeispiel der Erfindung sollen lediglich als Beispiele für einen Bremsrotor mit reinem Stoffschluss zwischen einem zentralen Innenbereich und einem ringförmigen Außenbereich beziehungsweise für einen Bremsrotor mit kombiniertem Stoffschluss und Formschluss zwischen einem zentralen Innenbereich und einem ringförmigen Außenbereich dienen.

Zur Optimierung des Kraftschlusses und Hemmung von Vibrationen zwischen dem zentralen Innenbereich 12 und dem ringförmigen Außenbereich 14 können auch andere geeignete Formen als Mitnehmerfortsätze vorgesehen sein, wie beispielsweise Kreissegmentformen, Vierecksformen, rautenartige Formen, herzförmige Formen, ovale Übergangsformen oder dergleichen. Grundsätzlich kann sowohl die Anordnung als auch die Anzahl der Mitnehmerfortsätze 36 beliebig gewählt werden. Dabei können bei größeren Bremsrotordurchmessern mehr Mitnehmerfortsätze vorgesehen sein, als bei kleineren Durchmessern. Bei dem dargestellten Bremsrotor mit einem Durchmesser von ca. 100 mm liegt die Anzahl der Mitnehmerfortsätze zweckmäßigerweise im Bereich von 2 bis 50, insbesondere 20 bis 40 und vorzugsweise bei 32, wobei diese dann auch bevorzugt in Umfangsrichtung gleichmäßig verteilt sind, sodass das dynamische Verhalten des Bremsrotors sowohl bei Rotation als auch bei axialer Verschiebung optimiert ist. Weiter ist es möglich, zwischen zentralem Innenbereich 12 und dem ringförmigen Außenbereich 14 eine Evolventenverzahnung oder eine Trapezverzahnung vorzusehen.

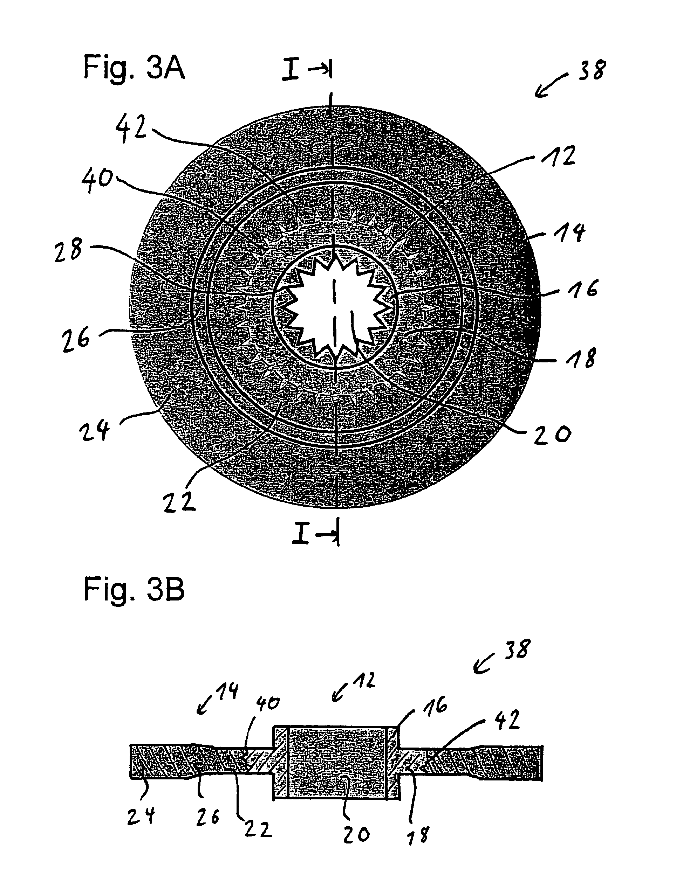

In Figur 3A und 3B ist ein Bremsrotor 38 gemäß einem dritten Ausführungsbeispiel der Erfindung gezeigt. Der Bremsrotor 38 entspricht dem Bremsrotor 10 und dem Bremsrotor 32 bis auf eine modifizierte Form des Übergangsbereichs 40 zwischen dem zentralen Innenbereich 12 und dem ringförmigen Außenbereich 14. Bei dieser Ausführungsform der Erfindung sind schematisch angedeutete unregelmäßige Strukturen 42 im Übergangsbereich von der ersten zu der zweiten Materialzusammensetzung des faserverstärkten Duroplasten eingebracht. Diese unregelmäßigen Strukturen 42 können beispielsweise schon vor einem Verbindungsprozess zwischen dem Innenbereich 12 und dem Außenbereich 14 vorliegen oder während des Verbindungsprozesses durch mechanische Behandlung eingebracht werden. Darüber hinaus sei darauf hingewiesen, dass die unregelmäßigen Strukturen 42 zwischen dem zentralen Innenbereich 12 und dem ringförmigen Außenbereich 14 durch ein Verfließen des Duroplasten entstehen können. Somit sind also unregelmäßige Strukturen 42 zwischen dem Innenbereich 12 und dem Außenbereich 14 im Übergangsbereich 30 bei einer praktischen Ausgestaltung der Erfindung eher der Normalfall und ein perfekt glatter Übergangsbereich 30 stellt die Ausnahme dar. Durch die unregelmäßigen Strukturen 42 weist die Grenzfläche zwischen Innenbereich 12 und Außenbereich 14 im Übergangsbereich 30 eine Rauheit oder Körnigkeit auf, die den Stoffschluss aufgrund des erzeugten Formschlusses noch weiter verstärkt. Bei einer Verbindung des Innenbereichs 12 und des Außenbereichs 14 entsteht jedoch aufgrund der Affinität der Harze in den beiden Bereichen ein hervorragender Stoffschluss, welcher den Großteil der mechanischen Last tragen kann.

Erfindungsgemäß ist also ein Bremsrotor 10, 32 oder 38 geschaffen, welcher einen Innenbereich mit hoher Festigkeit für eine hohe mechanische Beanspruchung und einen Außenbereich mit einem Bremsabschnitt mit hohem Reibwert zwischen etwa 0,3 und 0,5 und mit hoher Kompressibilität und guten tribologischen Eigenschaften aufweist, wobei der Bremsrotor einfach herzustellen ist, und einen guten Kraftschluss zwischen Innenbereich und Außenbereich aufgrund eines Stoffschlusses und/oder eines Formschlusses ermöglicht.

## Patentansprüche

1. Bremsrotor (10, 32, 38) mit:
- einem zentralen Innenbereich (12), welcher einen Nabenabschnitt (16) mit einer konzentrischen Durchgangsöffnung (20) zur Aufnahme einer zu bremsenden Welle und einen sich an den Nabenabschnitt (16) anschließenden ersten Flanschabschnitt (18) aufweist,
- einem konzentrisch an dem zentralen Innenbereich (12) angeordneten ringförmigen Außenbereich (14), welcher einen zweiten Flanschabschnitt (22) und einen Bremsabschnitt (24) mit einer Reibfläche aufweist,
wobei der zentrale Innenbereich (12) dazu ausgebildet ist, hohe Drehmomente von dem ringförmigen Außenbereich (14) auf die zu bremsende Welle zu übertragen, und der ringförmige Außenbereich (14) hinsichtlich seiner tribologischen Eigenschaften optimiert ist,
**dadurch gekennzeichnet, dass**
der zentrale Innenbereich (12) aus einer ersten Materialzusammensetzung eines faserverstärkten Duroplasten hergestellt ist,
der ringförmige Außenbereich (14) aus einer zweiten Materialzusammensetzung eines faserverstärkten Duroplasten hergestellt ist, und dass
die radiale Außenseite des ersten Flanschabschnitts (18) und die radiale Innenseite des zweiten Flanschabschnitts (22) stoffschlüssig miteinander verbunden sind.

2. Bremsrotor (10, 32, 38) nach Anspruch 1, **dadurch gekennzeichnet, dass** die erste Materialzusammensetzung des faserverstärkten Duroplasten eine Dichte von 1,0 bis 2,6 g/cm³, vorzugsweise 1,6 bis 2,3 g/cm³ und insbesondere 2,1 g/cm³, eine Zugfestigkeit von 50 bis 200 N/mm² , vorzugsweise 80 bis 160 N/mm², und insbesondere 140 N/mm², eine Biegefestigkeit von 70 bis 300 N/mm², vorzugsweise 220 bis 260 N/mm² und insbesondere 240 N/mm², und eine Druckfestigkeit von 120 bis 375 N/mm², vorzugsweise 300 bis 350 N/mm², und insbesondere 325 N/mm² aufweist.

3. Bremsrotor (10, 32, 38) nach einem der vorstehenden Ansprüche, **dadurch gekennzeichnet, dass** die zweite Materialzusammensetzung des faserverstärkten Duroplasten eine Dichte von 1 bis 2 g/cm³, vorzugsweise 1,4 bis 1,8 g/cm³ und insbesondere 1,6 g/cm³, eine Zugfestigkeit von 10 bis 100 N/mm² , vorzugsweise 10 bis 50 N/mm², und insbesondere 29 N/mm², eine Biegefestigkeit von 10 bis 100 N/mm², vorzugsweise 50 bis 90 N/mm² und insbesondere 68 N/mm², und eine Druckfestigkeit von 50 bis 150 N/mm², vorzugsweise 70 bis 110 N/mm², und insbesondere 86 N/mm² aufweist.

4. Bremsrotor (10, 32, 38) nach einem der vorstehenden Ansprüche, **dadurch gekennzeichnet, dass** die erste und zweite Materialzusammensetzung des faserverstärkten Duroplasten phenoplastische Kunststoffe, wie Phenolharz, Phenol/Melaminharz oder Epoxydharz auf Phenolharz-Basis, enthält.

5. Bremsrotor (10, 32, 38) nach einem der vorstehenden Ansprüche, **dadurch gekennzeichnet, dass** die erste und zweite Materialzusammensetzung des faserverstärkten Duroplasten 10 bis 60 Gew.-%, vorzugsweise 20 bis 50 Gew.-% Verstärkungsfasern, bezogen auf das Gesamtgewicht des Bremsrotors (10, 32, 38), enthalten.

6. Bremsrotor (10, 32, 38) nach einem der vorstehenden Ansprüche, **dadurch gekennzeichnet, dass** die erste und zweite Materialzusammensetzung des faserverstärkten Duroplasten organische und/oder anorganische Verstärkungsfasern enthalten.

7. Bremsrotor (10, 32, 38) nach Anspruch 4, **dadurch gekennzeichnet, dass** die erste und zweite Materialzusammensetzung des faserverstärkten Duroplasten als Verstärkungsfasern Glasfasern, Keramikfasern, Aluminiumoxidfasern, Kohlenstofffasern, Aramidfasern und/oder metallische Fasern, plus Cellulosefasern und Mineralfasern enthalten.

8. Bremsrotor (10, 32, 38) nach Anspruch 6 oder 7, **dadurch gekennzeichnet, dass** die Verstärkungsfasern eine mittlere Faserlänge von 3 bis 15 mm, vorzugsweise von 5 bis 10 mm aufweisen.

9. Bremsrotor (10, 32, 38) nach einem der vorstehenden Ansprüche, **dadurch gekennzeichnet, dass** die zweite Materialzusammensetzung des faserverstärkten Duroplasten neben den Verstärkungsfasem und einem Duroplast als Zusatzstoffe Gleitmittel wie Graphit, Molybdendisulfid, Bariumsulfat, Calciumcarbonat oder Mischungen davon, Schleifmittel auf der Grundlage von Oxiden, Nitriden oder Carbiden und Füllstoffe, wie Bariumsulfat oder Calciumsulfat, und vulkanisierten oder unvulkanisierten natürlichen Kautschuk oder synthetischen Kautschuk enthält.

10. Bremsrotor (10, 32, 38) nach einem der vorstehenden Ansprüche, **dadurch gekennzeichnet, dass** die Innenumfangsfläche der Durchgangsöffnung (20) im Nabenabschnitt (16) mit Mitnahmemitteln (28) zur drehfesten Lagerung auf einer zu bremsenden Welle versehen ist.

11. Bremsrotor (10, 32, 38) nach Anspruch 10, **dadurch gekennzeichnet, dass** die Mitnahmemittel (28) von einer Verzahnung zur Aufnahme einer Wellenverzahnung auf der zu bremsenden Welle gebildet sind.

12. Bremsrotor (10, 32, 38) nach einem der vorstehenden Ansprüche, **dadurch gekennzeichnet, dass** sowohl der zentrale Innenbereich (12) als auch der ringförmige Außenbereich (14) im Grenzbereich des stoffschlüssigen Übergangs zwischen der ersten und der zweiten Materialzusammensetzung eine geringere Dicke aufweisen als die des Nabenabschnitts (16) des zentralen Innenbereichs (12) und die des Bremsabschnitts (24) des ringförmigen Außenbereichs (14).,

13. Bremsrotor (10, 32, 38) nach einem der vor stehenden Ansprüche, **dadurch gekennzeichnet, dass** der zentrale Innenbereich (12) an seiner Umfangsseite einen oder mehrere radiale nach außen gerichtete Mitnehmerfortsätze (36) aufweist, welche mit einem oder mehreren radial nach Innen gerichteten Mitnehmerfortsätzen des ringförmigen Außenbereichs (14) formschlüssig in Eingriff stehen.

14. Bremsrotor (10, 32, 38) nach einem der vorstehenden Ansprüche, **dadurch gekennzeichnet, dass** der zentrale Innenbereich (12) und der ringförmige Außenbereich (14) durch unregelmäßige Strukturen (42) im Übergangsbereich (40) von der ersten zu der zweiten Materialzusammensetzung des faserverstärkten Duroplasten formschlüssig miteinander verbunden sind.

## Claims

1. A brake rotor (10, 32, 38) comprising:
- a central inner region (12), which has a hub portion (16) with a concentric through-opening (20) for receiving a shaft to be braked and has a first flange portion (18) adjoining the hub portion (16),
- an annular outer region (14), arranged concentrically on the central inner region (12), which has a second flange portion (22) and has a breaking portion (24) with a friction surface,
the central inner region (12) being formed for transmitting high torques from the annular outer region (14) to the shaft to be braked, and the annular outer region (14) being optimized with regard to its tribological properties,
**characterized in that** the central inner region (12) is made of a first material composition of a fiber-reinforced thermoset,
the annular outer region (14) is made of a second material composition of a fiber-reinforced thermoset, and **in that**
the radial outer surface of the first flange portion (18) and the radial inner surface of the second flange portion (22) are connected to each other with a material bond.

2. The brake rotor (10, 32, 38) as claimed in claim 1, **characterized in that** the first material composition of the fiber-reinforced thermoset has a density of 1.0 to 2.6 g/cm³, preferably 1.6 to 2.3 g/cm³ and particularly 2.1 g/cm³, a tensile strength of 50 to 200 N/mm², preferably 80 to 160 N/mm², and particularly 140 N/mm², a flexural strength of 70 to 300 N/mm², preferably 220 to 260 N/mm² and particularly 240 N/mm², and a compressive strength of 120 to 375 N/mm², preferably 300 to 350 N/mm², and particularly 325 N/mm².

3. The brake rotor (10, 32, 38) as claimed in one of the preceding claims, **characterized in that** the second material composition of the fiber-reinforced thermoset has a density of 1 to 2 g/cm³, preferably 1.4 to 1.8 g/cm³ and particularly 1.6 g/cm³, a tensile strength of 10 to 100 N/mm², preferably 10 to 50 N/mm², and particularly 29 N/mm², a flexural strength of 10 to 100 N/mm², preferably 50 to 90 N/mm² and particularly 68 N/mm², and a compressive strength of 50 to 150 N/mm², preferably 70 to 110 N/mm², and particularly 86 N/mm².

4. The brake rotor (10, 32, 38) as claimed in one of the preceding claims, **characterized in that** the first and second material compositions of the fiber-reinforced thermoset contain phenoplastic polymers, such as phenolic resin, phenolic/melamine resin or phenolic-resin-based epoxy resin.

5. The brake rotor (10, 32, 38) as claimed in one of the preceding claims, **characterized in that** the first and second material compositions of the fiber-reinforced thermoset contain 10 to 60% by weight, preferably 20 to 50% by weight, of reinforcing fibers, with respect to the overall weight of the brake rotor (10, 32, 38).

6. The brake rotor (10, 32, 38) as claimed in one of the preceding claims, **characterized in that** the first and second material compositions of the fiber-reinforced thermoset contain organic and/or inorganic reinforcing fibers.

7. The brake rotor (10, 32, 38) as claimed in claim 4, **characterized in that** the first and second material compositions of the fiber-reinforced thermoset contain as reinforcing fibers glass fibers, ceramic fibers, alumina fibers, carbon fibers, aramid fibers and/or metallic fibers, plus cellulose fibers and mineral fibers.

8. The brake rotor (10, 32, 38) as claimed in claim 6 or 7, **characterized in that** the reinforcing fibers have an average fiber length of 3 to 15 mm, preferably of 5 to 10 mm.

9. The brake rotor (10, 32, 38) as claimed in one of the preceding claims, **characterized in that**, along with the reinforcing fibers and a thermoset, the second material composition of the fiber-reinforced thermoset contains, as additives, lubricants such as graphite, molybdenum disulfide, barium sulfate, calcium carbonate or mixtures thereof, abrasives based on oxides, nitrides or carbides and fillers, such as barium sulfate or calcium sulfate, and vulcanized or unvulcanized natural rubber or synthetic rubber.

10. The brake rotor (10, 32, 38) as claimed in one of the preceding claims, **characterized in that** the inner circumferential surface of the through-opening (20) in the hub portion (16) is provided with driving means (28) for rotationally fixed mounting on a shaft to be braked.

11. The brake rotor (10, 32, 38) as claimed in claim 10, **characterized in that** the driving means (28) are formed by teeth for receiving shaft teeth on the shaft to be braked.

12. The brake rotor (10, 32, 38) as claimed in one of the preceding claims, **characterized in that** both the central inner region (12) and the annular outer region (14) in the boundary region of the material-bonded transition between the first and second material compositions have a smaller thickness than that of the hub portion (16) of the central inner region (12) and that of the braking portion (24) of the annular outer region (14).

13. The brake rotor (10, 32, 38) as claimed in one of the preceding claims, **characterized in that** the central inner region (12) has on its circumferential side one or more radially outwardly directed driver extensions (36), which are in form-fitting engagement with one or more radially inwardly directed driver extensions of the annular outer region (14).

14. The brake rotor (10, 32, 38) as claimed in one of the preceding claims, **characterized in that** the central inner region (12) and the annular outer region (14) are connected to each other with a form fit by irregular structures (42) in the transitional region (40) from the first material composition to the second material composition of the fiber-reinforced thermoset.

## Revendications

1. Rotor de frein (10, 32, 38) comprenant :
- une zone intérieure centrale (12) qui comprend un tronçon de moyeu (16) avec une ouverture traversante concentrique (20) pour recevoir un arbre à freiner, et un premier tronçon de bride (18) qui se raccorde au tronçon de moyeu (16),
- une zone extérieure de forme annulaire (14) agencée de manière concentrique à la zone intérieure centrale (12), qui comprend un second tronçon de bride (22), et un tronçon de frein (24) avec une surface de friction,
dans lequel la zone intérieure centrale (12) est réalisée pour transmettre des couples de rotation élevés depuis la zone extérieure de forme annulaire (14) vers l'arbre à freiner, et la zone extérieure de forme annulaire (14) est optimisée pour ce qui concerne ses propriétés tribologiques,
**caractérisé en ce que**
la zone intérieure centrale (12) est fabriquée à partir d'une première composition de matériaux d'une matière thermodurcissable renforcée par des fibres,
la zone extérieure de forme annulaire (14) est fabriquée à partir d'une seconde composition de matériaux d'une matière thermodurcissable renforcée par des fibres, et
la face extérieure radiale du premier tronçon de bride (18) et la face intérieure radiale du second tronçon de bride (22) sont reliées l'une à l'autre par coopération de matières.

2. Rotor de frein (10, 32, 38) selon la revendication 1, **caractérisé en ce que** la première combinaison de matériaux de la matière thermodurcissable renforcée par des fibres présente une densité de 1,0 à 2,6 g/cm³, de préférence 1,6 à 2,3 g/cm³ et en particulier 2,1 g/cm³, une résistance à la traction de 50 à 200 N/mm², de préférence 80 à 160 N/mm² et en particulier 140 N/mm², une résistance à la flexion de 70 à 300 N/mm², de préférence de 120 à 260 N/mm² et en particulier de 140 N/mm², et une résistance à la compression de 120 à 375 N/mm², de préférence 300 à 350 N/mm² et en particulier 325 N/mm².

3. Rotor de frein (10, 32, 38) selon l'une des revendications précédentes, **caractérisé en ce que** la seconde composition de matériaux de la matière thermodurcissable renforcée par des fibres présente une densité de 1 à 2g/cm³, de préférence 1,4 à 1,8 g/cm³ et en particulier 1,6 g/cm³, une résistance à la traction de 10 à 100 N/mm², de préférence 10 à 50 N/mm² et en particulier 29 N/mm², une résistance à la flexion de 10 à 100 N/mm², de préférence 50 à 90 N/mm² et en particulier 68 N/mm², et une résistance à la compression de 50 à 150 N/mm², de préférence 70 à 110 N/mm² et en particulier 86 N/mm².

4. Rotor de frein (10, 32, 38) selon l'une des revendications précédentes, **caractérisé en ce que** la première et la seconde composition de matériaux de la matière thermodurcissable renforcée par des fibres contiennent des matières phéno-plastiques, comme résine au phénol, résine phénol/mélamine, ou résine époxyde à base de résine phénolique.

5. Rotor de frein (10, 32, 38) selon l'une des revendications précédentes, **caractérisé en ce que** la première et la seconde composition de matériaux de la matière thermodurcissable renforcée par des fibres contiennent 10 à 60 % en poids, de préférence 20 à 50 % en poids de fibres de renforcement, par référence au poids total du rotor de frein (10, 32, 38).

6. Rotor de frein (10, 32, 38) selon l'une des revendications précédentes, **caractérisé en ce que** la première et la seconde composition de matériaux de la matière thermodurcissable renforcée par des fibres contiennent des fibres de renforcement organiques et/ou inorganiques.

7. Rotor de frein (10, 32, 38) selon la revendication 4, **caractérisé en ce que** la première et la seconde composition de matériaux de la matière thermodurcissable renforcée par des fibres contiennent, à titre de fibres de renforcement, des fibres de verre, des fibres céramiques, des fibres d'oxyde d'aluminium, des fibres de carbone, des fibres aramides et/ou des fibres métalliques, plus des fibres de cellulose et des fibres minérales.

8. Rotor de frein (10, 32, 38) selon la revendication 6 ou 7, **caractérisé en ce que** les fibres de renforcement présentent une longueur de fibres moyenne de 3 à 15 mm, de préférence de 5 à 10 mm.

9. Rotor de frein (10, 32, 38) selon l'une des revendications précédentes, **caractérisé en ce que** la seconde composition de matériaux de la matière thermodurcissable renforcée par des fibres contient, outre les fibres de renforcement et une matière thermodurcissable, des agents favorisant le glissement comme graphite, bisulfure de molybdène, sulfate de baryum, carbonate de calcium ou des mélanges de ces agents, des agents abrasifs à base d'oxyde, de nitrure ou de carbure, et des agents de remplissage, comme sulfate de baryum ou sulfate de calcium, ainsi que du caoutchouc naturel vulcanisé ou non vulcanisé ou encore du caoutchouc synthétique, à titre de matériaux additionnels.

10. Rotor de frein (10, 32, 38) selon l'une des revendications précédentes, **caractérisé en ce que** la surface périphérique intérieure de l'ouverture traversante (20) dans le tronçon de moyeu (16) est dotée de moyens d'entraînement (28) pour un montage solidaire en rotation sur un arbre à freiner.

11. Rotor de frein (10, 32, 38) selon la revendication 10, **caractérisé en ce que** les moyens d'entraînement (28) sont formés par une denture destinée à recevoir une denture sur l'arbre à freiner.

12. Rotor de frein (10, 32, 38) selon l'une des revendications précédentes, **caractérisé en ce que** la zone intérieure centrale (12) tout comme la zone extérieure de forme annulaire (14) présentent, dans la zone frontière de la transition par coopération de matières entre la première et la seconde composition de matériaux, une épaisseur plus faible que celle du tronçon de moyeu (16) de la zone intérieure centrale (12) et que celle du tronçon de frein (24) de la zone extérieure de forme annulaire (14).

13. Rotor de frein (10, 32, 38) selon l'une des revendications précédentes, **caractérisé en ce que** la zone intérieure centrale (12) comporte, sur sa face périphérique, un ou plusieurs prolongements d'entraînement radiaux dirigés vers l'extérieur (36), qui sont en engagement par coopération de formes avec un ou plusieurs prolongements d'engagement radiaux dirigés vers l'intérieur de la zone extérieure de forme annulaire (14).

14. Rotor de frein (10, 32, 38) selon l'une des revendications précédentes, **caractérisé en ce que** la zone intérieure centrale (12) et la zone extérieure de forme annulaire (14) sont reliées l'une à l'autre par coopération de formes au moyen de structures irrégulières (42) dans la zone de transition (40) de la première à la seconde composition de matériaux de la matière thermodurcissable renforcée par des fibres.
